# EUROPEAN PATENT APPLICATION

(11) **EP 3 916 284 A1**
(43) Date of publication of application: **01.12.2021**
(21) Application number: 21166961.9
(22) Date of filing: 06.04.2021
(51) Int. Cl.: F16L 37/088, B60T 17/04

(54) **QUICK CONNECTOR LOCKING STRUCTURE FOR AIR BRAKE SYSTEM PIPELINE OF COMMERCIAL VEHICLE**

(30) Priority: 25.05.2020 CN 202010450615
(71) Applicant: Changchun Chinaust Automobile Parts Co., Ltd., Jilin Province, P.R. (CN)
(72) Inventor: HAO, Chunyu, Jilin Province,P.R. (CN); LI, Hongjie, Jilin Province,P.R. (CN); FENG, Yongliang, Jilin Province,P.R. (CN); LI, Qinggang, Jilin Province,P.R. (CN); ZHAO, Xin, Jilin Province,P.R. (CN); MEN, Ge, Jilin Province,P.R. (CN); ZHANG, Bolun, Jilin Province,P.R. (CN); CHEN, Yunpeng, Jilin Province,P.R. (CN); WANG, Luping, Jilin Province,P.R. (CN); FAN, Jinming, Jilin Province,P.R. (CN); LI, Jian, Jilin Province,P.R. (CN); ZHOU, Yuping, Jilin Province,P.R. (CN)
(74) Representative: Ipside

(57) **Abstract**

The present invention discloses a quick connector locking structure for an air brake system pipeline of a commercial vehicle, comprising a quick connector assembly 100 and a threaded sleeve assembly 200 into which the quick connector assembly is inserted. The quick connector assembly comprises a connector main body 110, a first sealing ring 120, a second sealing ring 130 and a snap ring 140; the snap ring is in a C shape when viewed from the axial direction, and the opening end of the snap ring is inwards bent; the threaded sleeve assembly comprises a threaded sleeve main body 210 and a third sealing ring 220; the snap ring and the threaded sleeve main body form a self-locking fixing structure, so as to achieve unidirectional locking of the quick connector assembly. By the implementation of the present invention, during assembling of a whole vehicle or separate assembling of parts, the quick connector can reduce the risk of missing, and is smaller in size and lighter in weight. By means of setting the snap ring into a conical shape with an inwards bent opening, the radial motion range of the snap ring in a snap ring slot can be reduced, and insertion of the connector is facilitated.

## Description

### Technical Field

The present invention relates to the technical field of quick connectors, and in particular to a quick connector locking structure for an air brake system pipeline of a commercial vehicle.

### Background of the Invention

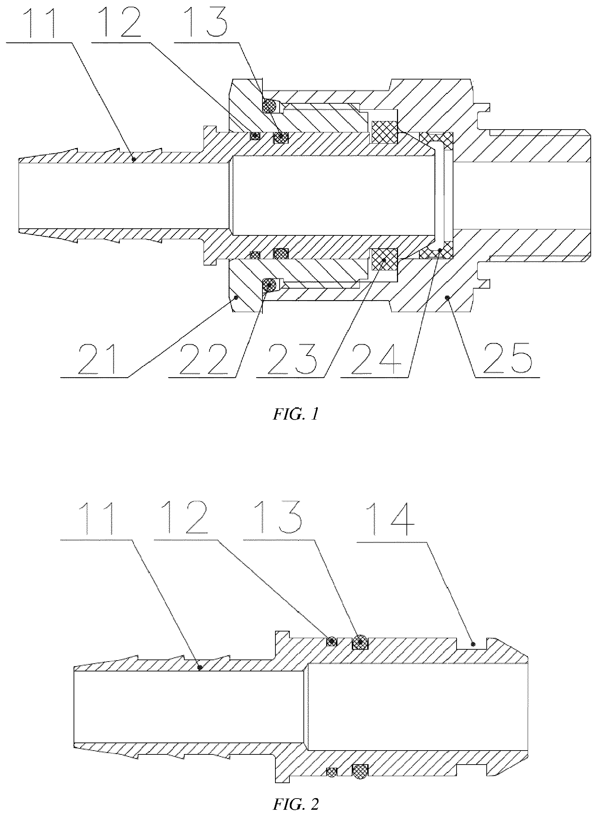

Quick connectors have been widely used on vehicle pipeline systems at present. As shown in Figs. 1 to 3, a quick connector form usually used in an air brake system pipeline at present is illustrated. The quick connector generally comprises a quick connector assembly, a threaded sleeve assembly, a snap ring and a sealing gasket. The quick connector assembly is composed of a connector main body 11 and two sealing rings (12, 13); the threaded sleeve assembly is composed of a threaded sleeve main body 21 and a sealing ring 22; and the snap ring 23 and the sealing gasket 24 are two independent components. The assembling of the quick connector assembly is to sheath the connector main body 11 with the two sealing rings (12, 13) at first, and then assemble a dustproof cap (which needs to be removed during use), thus completing the assembling of the quick connector assembly. In most cases, the assembling of a connector body assembly or a valve body is to assemble the sealing ring 22 on the threaded sleeve main body 21 at first to form the threaded sleeve assembly, assemble the snap ring 23 and the sealing gasket 24 in threaded holes of a connector body main body 25 or the valve body, and then assemble the threaded sleeve assembly and a sealing ring 26, thus completing the assembling of the connector body assembly. During use, the quick connector assembly is inserted into an inner hole of the threaded sleeve main body 21 of the connector body assembly or the valve body; and the snap ring 23 is clamped in a first groove 14 at the end portion of the connector main body 11 to achieve locking of the quick connector assembly and the connector body assembly or the valve body.

For either the assembling of the connector body assembly or the assembling of components on the valve body, after the assembling is completed, the sealing rings (22, 26), the snap ring 23 and the sealing gasket 24 are all not easy to observe. If there is a component missing during assembling, the influence on the connection performance is very large. In addition, during insertion, if the snap ring 23 cannot be restored, the connector main body 11 cannot be locked, which would cause the connector main body 11 to be disengaged from the threaded sleeve main body 21 during pressurisation of a pipeline system.

In addition, the quick connector is relatively large in size, relatively heavy in weight and complicated in structure, and the snap ring is relatively low in locking performance.

### Summary of the Invention

In order to solve the shortcomings in the prior art, the present invention provides a quick connector locking structure for an air brake system pipeline of a commercial vehicle. During assembling of a whole vehicle or separate assembling of parts, the quick connector can reduce the risk of missing, and is smaller in size and lighter in weight. By means of setting a snap ring into a conical shape with an inwards bent opening, the radial motion range of the snap ring in a snap ring slot can be reduced, and insertion of the connector is facilitated.

The technical effects to be achieved by the present invention are achieved through the following solution: a quick connector locking structure for an air brake system pipeline of a commercial vehicle comprises a quick connector assembly and a threaded sleeve assembly into which the quick connector assembly is inserted. The quick connector assembly comprises a connector main body, a first sealing ring, a second sealing ring and a snap ring; the snap ring is in a C shape when viewed from the axial direction, and the opening end of the snap ring is inwards bent; the threaded sleeve assembly comprises a threaded sleeve main body and a third sealing ring; the snap ring and the threaded sleeve main body form a self-locking fixing structure, so as to achieve unidirectional locking of the quick connector assembly.

Preferably, the radial cross section of the snap ring is in a strip shape, and the cross section of the snap ring is provided with a first horizontal portion, a second horizontal portion with a diameter less than the diameter of the first horizontal portion, and inclined portions connecting the first horizontal portion with the second horizontal portion; and the second horizontal portion is arranged close to the outermost end of the quick-insertion end relative to the first horizontal portion.

Preferably, the threaded sleeve main body is provided with an external thread used for being connected with a valve body or a connector body and cooperating with the third sealing ring to achieve a sealing function after connection.

Preferably, the threaded sleeve main body is internally provided with stepped inner holes from two ends to the centre; a first annular groove and a second annular groove are arranged in a port position, provided with the external thread, of the threaded sleeve main body to achieve a two-stage locking function of the snap ring.

Preferably, a first annular slot used for accommodating the first sealing ring, a second annular slot used for accommodating the second sealing ring and a snap ring slot used for accommodating the snap ring are sequentially formed on the outer side wall of the quick-insertion end of the connector main body at intervals.

Preferably, bamboo-joint-shaped barbs used for fast connection to a hose are formed on the outer side wall of the pipeline connection end of the connector main body.

The present invention has the following advantages:
1, the quick connector of the embodiment of the present invention achieves fast connection of pipeline products during assembling of the whole vehicle and achieves locking and sealing functions between connectors. Compared with the quick connector in the prior art, the quick connector reduces the number of parts, facilitates separate assembling, and can be shortened in length dimension by about 9 mm, thereby reducing the size and reducing the weight;
2, restoring of the snap ring for achieving locking at a first-stage locking position and a second-stage locking position is equivalent to adding a two-stage locking function, so that the reliability and safety of connection between components are improved;
3, by means of setting the snap ring into the conical shape with the inwards bent opening, the radial motion range of the snap ring in the snap ring slot can be reduced, and insertion of the connector is facilitated.

### Brief description of the Drawings

Fig. 1 is a schematic sectional view of an assembled structure of a quick connector in the prior art;
Fig. 2 is a schematic sectional view of a structure of a quick connector assembly in Fig. 1;
Fig. 3 is a schematic sectional view of assembling positions of a threaded sleeve assembly, a snap ring and a sealing gasket in Fig. 1;
Fig. 4 is a schematic sectional view of an assembled structure of a quick connector locking structure of the present invention;
Fig. 5 is a schematic diagram of an exploded structure of a quick connector locking structure of the present invention;
Fig. 6 is a schematic sectional view of a structure of a straight-through quick connector assembly in Fig. 4;
Fig. 7 is a schematic sectional view of a structure of a connector main body in Fig. 5;
Fig. 8 is a schematic sectional view of a structure of a threaded sleeve assembly in Fig. 4;
Fig. 9 is a schematic sectional view of a structure of a threaded sleeve main body in Fig. 8;
FIG. 10 is a structural schematic diagram of a radial section of a snap ring in Fig. 4;
FIG. 11 is a structural schematic diagram of an axial plane of the snap ring in Fig. 4;
FIG. 12 is a structural schematic diagram of a three-dimensional structure of the snap ring in Fig. 4;
Fig. 13 is a schematic sectional view of a structure that a quick connector of the present invention is locked at a first-stage locking position during assembling; and
Fig. 14 is a schematic sectional view of a structure that a quick connector of the present invention is locked at a second-stage locking position (i.e., completely assembled) during assembling.

### Detailed Description of Embodiments

The present invention will be described in detail below in combination with the accompanying drawings and a straight-through quick connector assembly serving as an embodiment. Examples of the embodiments are shown in the drawings, in which the same or similar reference numerals indicate the same or similar elements or elements with the same or similar functions. The embodiments described below with reference to the drawings are exemplary, and are intended to explain the present invention, and should not be construed as limiting the present invention.

In the description of the present invention, it should be understood that orientations or positional relationships indicated by the terms "length", "width", "upper", "lower", "front", "rear", "left", "right", "vertical", "horizontal", "top", "bottom", "inside", "outside" and the like are orientations or positional relationships as shown in the drawings, and are only for the purpose of facilitating and simplifying the description of the present invention instead of indicating or implying that devices or elements indicated must have particular orientations, and be constructed and operated in the particular orientations, so that these terms are not construed as limiting the present invention.

In addition, the terms "first", "second" and "third" are only for the purpose of description, and may not be understood as indicating or implying the relative importance or impliedly indicating the number of technical features indicated. Therefore, features defined by "first", "second" and "third" can explicitly instruct or impliedly include one or more features. In the description of the present invention, unless expressly specified otherwise, the meaning of the "plurality" is two or more than two.

In the present invention, unless otherwise clearly specified and defined, the terms "installation", "connected", "connection", "fixed", "arranged" and the like should be understood in a broad sense, for example, connection can be fixed connection, detachable connection, or integrated connection. Connection can be mechanical connection or electrical connection. Connection can also be direct connection, or indirect connection through an intermediate medium. Connection can also be internal communication between two components or the interaction between two components. For those of ordinary skill in the art, the specific meanings of the above terms in the present invention can be understood according to specific situations.

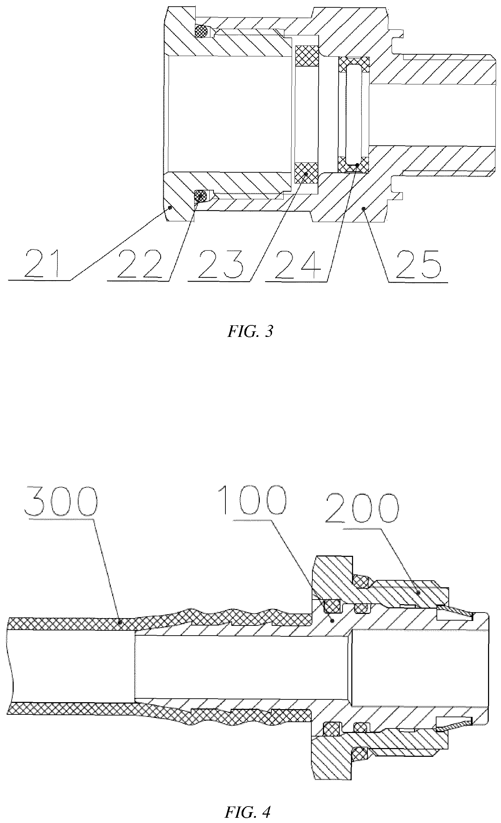

As shown in Figs. 4 to 8, the embodiment of the present invention provides a quick connector locking structure for an air brake system pipeline of a commercial vehicle, comprising a quick connector assembly 100 and a threaded sleeve assembly 200 into which the quick connector assembly 100 is inserted. One end of the quick connector assembly 100 is a quick-insertion end A, and is assembled in the threaded sleeve assembly 200. The other opposite end of the quick connector assembly 100 is a pipeline connection end B, and is assembled in a hose 300 in the pipeline. The threaded sleeve assembly 200 is provided with an external thread 214, so that the threaded sleeve assembly can be assembled on a pipe connection component (a valve body or a pneumatic component) in a threaded connection manner. A self-locking fixing structure is formed by the quick connector assembly 100 and the threaded sleeve assembly 200, so as to achieve unidirectional locking of the quick connector assembly.

In the technical solution, the self-locking fixing structure comprises a snap ring 140 mounted on the quick connector assembly 100 and a threaded sleeve main body 210 of the threaded sleeve assembly 200. When the quick connector assembly 100 is inserted into the threaded sleeve assembly 200, the snap ring 140 firstly achieves locking at a first-stage locking position via a first annular groove 212 of the threaded sleeve main body 210; then, the quick connector assembly continues to be inserted, and the snap ring 140 is finally clamped in a second annular groove 213 of the threaded sleeve main body 210 to achieve locking at a second-stage locking position; and at this time, the quick connector assembly cannot be withdrawn.

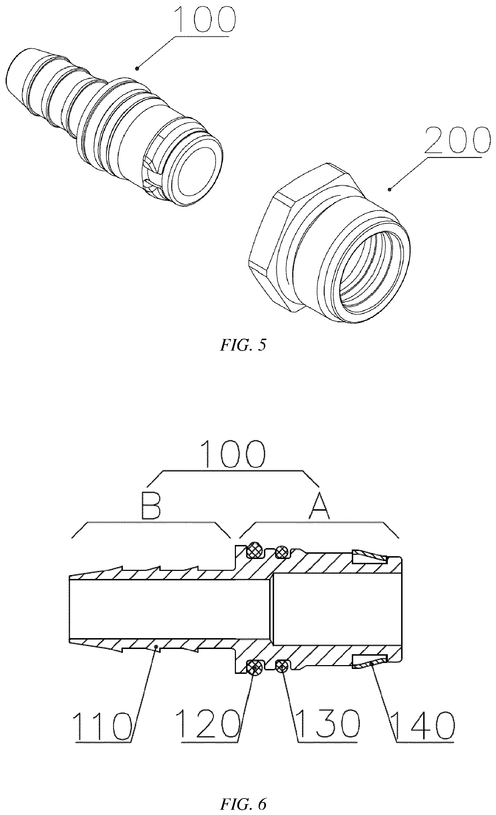

Specifically, as shown in Figs. 6 to 7, the quick connector assembly 100 comprises a connector main body 110, a first sealing ring 120, a second sealing ring 130 and a snap ring 140; bamboo-joint-shaped barbs 114 which are in fast connection to the hose 300 are formed on the outer side wall of the pipeline connection end B of the connector main body 110; and after the hose 300 is connected to the pipeline connection end B in a sleeving manner, the hose is not prone to fall off under the action of the bamboo-joint-shaped barbs 114. It should be understood that the connected structure of the pipeline connection end B of the connector main body 110 and the pipeline is not only limited to this structure. A first annular slot 111 used for accommodating the first sealing ring 120, a second annular slot 112 used for accommodating the second sealing ring 130 and a snap ring slot 113 used for accommodating the snap ring 140 are sequentially formed on the outer side wall of the quick-insertion end A of the connector main body 110 at intervals. The first sealing ring 120 is partially beyond the first annular slot 111; the second sealing ring 130 is partially beyond the second annular slot 112; the snap ring 140 is partially beyond the snap ring slot 113; and therefore, the reliability of hermetical connection between the quick connector assembly 100 and the threaded sleeve assembly 200 is improved.

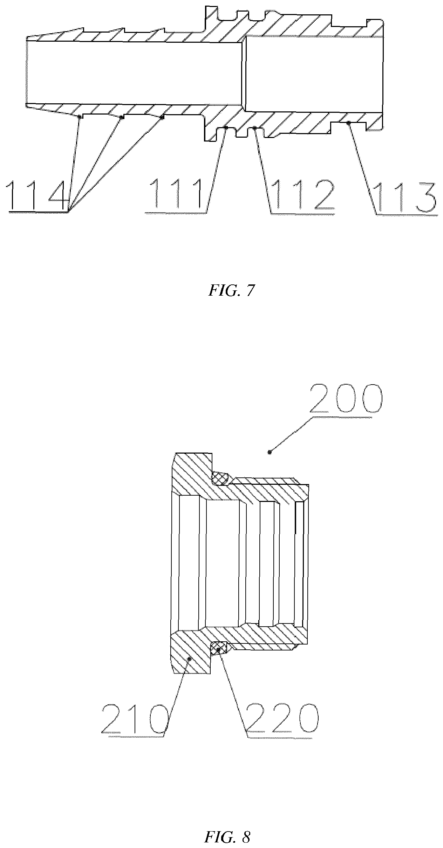

As shown in Figs. 8 to 10, the threaded sleeve assembly 200 comprises a threaded sleeve main body 210 and a third sealing ring 220. The threaded sleeve main body 210 is internally provided with stepped inner holes which are connected with the connector main body 110 from two ends to the centre; the first annular groove 212 and the second annular groove 213 are arranged in the port position, provided with an external thread 214, of the threaded sleeve assembly 200; the threaded sleeve main body 210 is provided with the external thread 214 for being connected with the valve body or the connector body and cooperating with the third sealing ring 220 to achieve a sealing function after connection. The threaded sleeve main body 210 adopts the stepped inner holes to avoid the influence of scratches, generated by the snap ring 140, to a sealed surface on the sealing performance. The third sealing ring 220 is arranged in a threaded tool withdrawal groove 211 of the threaded sleeve main body 210; the threaded sleeve main body 210 with the third sealing ring 220 is assembled in the pipe connection component through the external thread 214; and the third sealing ring 220 is in contact with the threaded tool withdrawal groove 211 of the threaded sleeve main body and the sealed surface of a threaded port of the pipe connection component to achieve sealing between the threaded sleeve main body 210 and the pipe connection component.

Due to the spaced arrangement of the first annular slot 111, the second annular slot 112 and the snap ring slot 113, the quick-insertion end A of the connector main body 110 is of a segmental structure to cooperate with the stepped inner holes inside the threaded sleeve main body 210 to improve the stability after the quick-insertion end A is inserted into the threaded sleeve main body 210. The cross sections of both the first sealing ring 120 and the second sealing ring 130 are circular. Preferably, the diameter of the first sealing ring 120 is greater than the diameter of the second sealing ring 130. In this way, in cooperation with the stepped holes inside the threaded sleeve main body 210 for sealing, under the combined action of the snap ring 140, the quick connector assembly 100 inserted into the threaded sleeve assembly 200 in a free state cannot move front and back.

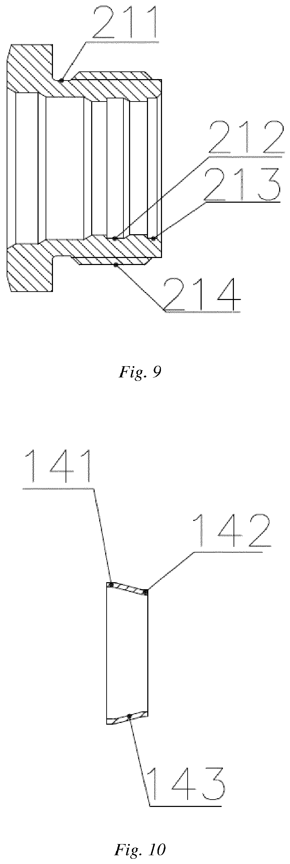

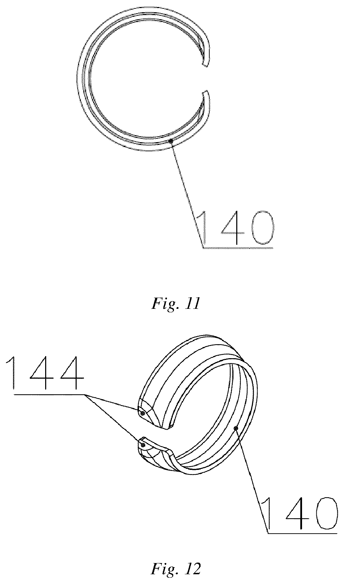

As shown in Figs. 10 to 12, the snap ring 140 is integrally in a frustum shape and is internally hollowed. The radial cross section of the snap ring is in a strip shape, and the cross section of the snap ring 140 is provided with a first horizontal portion 141, a second horizontal portion 142 with a diameter less than the diameter of the first horizontal portion, and inclined portions 143 connecting the first horizontal portion 141 with the second horizontal portion 142; and the second horizontal portion 142 is arranged close to the outermost end of the quick-insertion end A relative to the first horizontal portion 141. The snap ring 140 is in a C shape when viewed from the axial direction, and the opening end of the snap ring 140 is inwards bent. Specifically, inward bending of the opening end of the snap ring 140 is that the first horizontal portion 141 of the opening end of the snap ring 140 and the inclined portions 143 are inwards bent to form bent portions 144; axis dimensions of the inner surface planes of the bent portions 144 and the outer surface of the snap ring slot 113 satisfy the design requirements for clamping, that is, a distance between the bent portions and the snap ring slot 113 is shorter. The bending arrangement can prevent the snap ring 140 from having a too large degree of freedom in the snap ring slot 113, so that the radial motion range of the snap ring 140 in the snap ring slot 113 can be reduced; the phenomenon that the position of the first horizontal portion 141 is sheathed on the left side cylindrical surface of the snap ring slot 113 during connector insertion to cause an insertion failure of the connector is avoided; and the connector insertion is facilitated. Under an external force, the snap ring 140 can be inwards contracted, so that assembling and disassembling of the quick connector assembly 100 are facilitated.

The quick connector assembly 100 of the embodiment of the present invention can be designed into a straight-through shape or a right-angle shape and the like according to an actual demand (for instance, the straight-through shape is illustrated in the figure). Materials of the connector main body 110 and the threaded sleeve main body 210 can be lead brass or engineering plastic to meet different cost requirements. Materials of the first sealing ring 120, the second sealing ring 130 and the third sealing ring 220 can be different materials according to different conveying mediums. The snap ring 140 is processed from a stainless steel material, and this material has good corrosion resistance and certain elasticity to meet a use requirement.

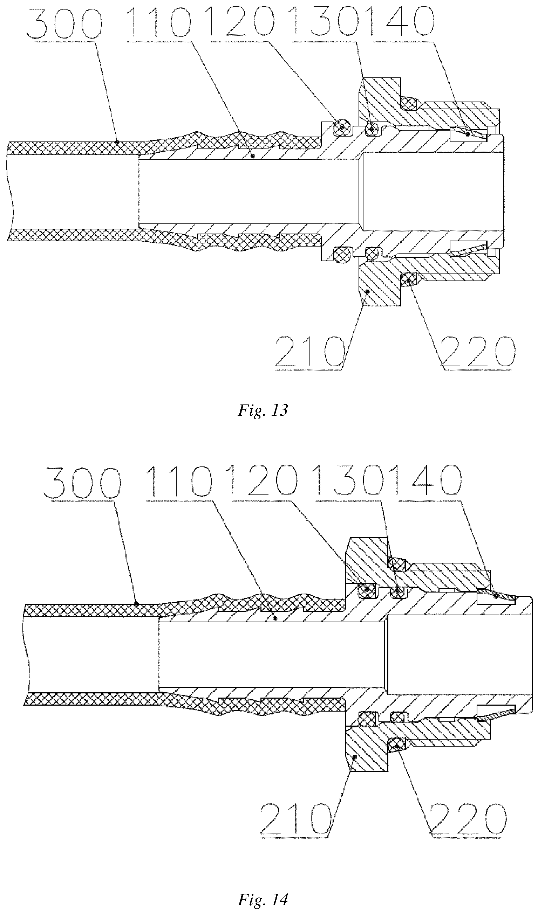

As shown in Fig. 13 and Fig. 14, the pipeline connection end B of the quick connector assembly 100 in the embodiment of the present invention is connected with the hose 300 of a pipeline system, and the quick-insertion end A of the quick connector assembly 100 is inserted into the threaded sleeve assembly 200 for hermetical connection to achieve medium conveying. During assembling, the quick connector assembly 100 and the threaded sleeve assembly 200 are integrally assembled separately at first; then, the threaded sleeve assembly 200 is assembled on the pipe connection component, and the connection end B of the quick connector assembly 100 is inserted into the hose 300 of the pipeline; and the quick-insertion end A of the quick connector assembly 100 is inserted into the stepped holes of the threaded sleeve assembly 200. Under the action of the external force, the snap ring 140 is inwards contracted; when the snap ring 140 reaches the first annular groove 212 of the threaded sleeve main body 210, the snap ring 140 is restored to achieve locking at a first-stage locking position, and at this time, the sealing function is disabled; when the quick-insertion end A of the quick connector assembly 100 continues to be inserted, the snap ring 140 is contracted again; when the snap ring 140 reaches the second annular groove 213 of the threaded sleeve main body, the snap ring 140 is restored again to achieve locking at a second-stage locking position, and at this time, sealing is achieved between the quick connector assembly 100 and the threaded sleeve assembly 200. During disassembling, the threaded sleeve main body 210 is removed with a wrench from the pipe connection component; then, a special tool is used to separate the quick connector assembly 100 from the threaded sleeve main body 210; the quick connector assembly 100 and the threaded sleeve main body 210 which are removed can be reused. The sealing performance and the connection strength cannot be affected only if the first sealing ring 120 and the second sealing ring 130 of the quick connector assembly 100 and the third sealing ring 220 of the threaded sleeve assembly 200 are not damaged.

The quick connector of the embodiment of the present invention achieves fast connection of pipeline products during assembling of a whole vehicle, and achieves locking and sealing functions between connectors. The quick connector can be applied to a vehicle brake pipeline system, a fuel pipeline system and a pipeline system that has a working pressure for conveying other mediums not greater than 1.5 MPa. Since only the quick connector assembly, the threaded sleeve assembly and the pipe connection component need to be inserted during assembling, compared with the quick connector in the prior art, the quick connector reduces the number of parts and facilitates separate assembling. Secondly, the snap ring 140 is restored via locking at the two locking positions, which is equivalent to adding a two-stage locking function to improve the reliability and the safety of the connection between the components. Thirdly, since the first sealing ring 120, the second sealing ring 130 and the snap ring 140 are pre-assembled on the outer side wall of the connector main body 110, and the threaded sleeve assembly 200 is pre-assembled on the pipe connection component, and then general assembling of the quick connector assembly 100 and the threaded sleeve assembly 200 is performed, so that the problem of missing parts is avoided, and the reliability of the connection between the components is ensured.

It should be finally noted that: the above embodiments are only used to describe the technical solutions of the present invention, and not intended to limit the present invention. Although the embodiments of the present invention has been described in detail with reference to the preferred embodiments, those of ordinary skill in the art should understand that they can still make modifications or equivalent replacements to the technical solutions of the embodiments of the present invention, and these modifications or equivalent replacements do not cause the modified technical solutions to depart from the scopes of the technical solutions of the embodiments of the present invention, either.

## Claims

1. A quick connector locking structure for an air brake system pipeline of a commercial vehicle, comprising a quick connector assembly and a threaded sleeve assembly into which the quick connector assembly is inserted, **characterized in that** the quick connector assembly comprises a connector main body, a first sealing ring, a second sealing ring and a snap ring; the snap ring is in a C shape when viewed from the axial direction, and an opening end of the snap ring is inwards bent; the threaded sleeve assembly comprises a threaded sleeve main body and a third sealing ring; and the snap ring and the threaded sleeve main body form a self-locking fixing structure, so as to achieve unidirectional locking of the quick connector assembly.

2. The quick connector locking structure for an air brake system pipeline of a commercial vehicle according to claim 1, **characterized in that** the radial cross section of the snap ring is in a strip shape, and the cross section of the snap ring is provided with a first horizontal portion, a second horizontal portion with a diameter less than a diameter of the first horizontal portion, and an inclined portion connecting the first horizontal portion with the second horizontal portion; and the second horizontal portion is arranged close to the outermost end of the quick-insertion end relative to the first horizontal portion.

3. The quick connector locking structure for an air brake system pipeline of a commercial vehicle according to claim 1, **characterized in that** the threaded sleeve main body is provided with an external thread used for being connected with a valve body or a connector body and cooperating with the third sealing ring to achieve a sealing function after connection.

4. The quick connector locking structure for an air brake system pipeline of a commercial vehicle according to claim 3, **characterized in that** the threaded sleeve main body is internally provided with stepped inner holes which are connected with the connector main body from two ends to the centre; a first annular groove and a second annular groove are arranged in a port position, provided with the external thread, of the threaded sleeve main body to achieve a two-stage locking function of the snap ring.

5. The quick connector locking structure for an air brake system pipeline of a commercial vehicle according to claim 1, **characterized in that** a first annular slot used for accommodating the first sealing ring, a second annular slot used for accommodating the second sealing ring and a snap ring slot used for accommodating the snap ring are sequentially formed on the outer side wall of the quick-insertion end of the connector main body at intervals.

6. The quick connector locking structure for an air brake system pipeline of a commercial vehicle according to claim 1, **characterized in that** bamboo-joint-shaped barbs used for fast connection to a hose are formed on the outer side wall of a pipeline connection end of the connector main body.
